# EUROPÄISCHE PATENTSCHRIFT

(11) **EP 1 958 827 B1**
(45) Veröffentlichungstag und Bekanntmachung des Hinweises auf die Patenterteilung: **10.03.2010**
(21) Anmeldenummer: 08000047.4
(22) Anmeldetag: 03.01.2008
(51) Int. Cl.: B60R 16/04, H01M 2/10

(54) **Halteeinrichtung für eine Fahrzeugbatterie**
Holding device for a car battery
Dispositif de retenue pour une batterie de véhicule

(30) Priorität: 15.02.2007 DE 102007007514
(43) Veröffentlichungstag der Anmeldung: 20.08.2008
(73) Patentinhaber: GM Global Technology Operations, Inc., Detroit, MI 48265-300 (US)
(72) Erfinder: Mildner, Udo, 65550 Limburg (DE)
(74) Vertreter: Strauss, Peter

(56) Entgegenhaltungen:
- WO-A-2004/006359
- DE-A1- 10 154 389
- DE-C1- 19 628 398
- US-A1- 2002 079 152

## Beschreibung

Die Erfindung betrifft eine Halteeinrichtung für eine Fahrzeugbatterie nach dem Oberbegriff des Patentanspruchs 1.

Eine derartige Einrichtung geht aus der Deutschen Patentschrift DE 196 28 398 C1 hervor, die eine als Batteriewanne bezeichnete Halteeinrichtung mit einer Anschlagwand offenbart, die im Montagezustand einen zugeordneten Batteriefußsteg übergreift. Dieser liegt eine Spannwand gegenüber, die vertikal derart geneigt ist, dass sie zu ihrer benachbarten Batterieseitenwand einen sich nach unten verjüngenden Montagespalt bildet. Zwischen Spannwand und Batteriewand ist ein Keil (Halteklammer) eingesetzt, der im montierten Zustand (mit angezogener Spannschraube) aufgrund des sich verjüngenden Spaltes zusätzlich eine horizontale Fixierung auf einen ihm zugewandten Batteriefuß ausübt. Das Einsetzen des Keils - insbesondere auch um ihn bezüglich einer korrespondierenden Gewindebuchse für die Spannschraube auszurichten - erfordert Übung und Geschick.

Die US 2002/0079152 A1 offenbart eine Halteeinrichtung zur wahlweisen Befestigung zweier unterschiedlicher Batterietypen. Diese Halteeinrichtung umfasst eine Batteriewanne mit einem in einem Teilbereich schräg zur Aufstandsfläche hin verlaufenden Ausleger. Zwischen diesem Ausleger und dem Batteriefuß wird ein Halteteil verschraubt. Im montierten Zustand drückt eine mit dem Ausleger korrespondierende Fläche an einem Ende des Halteteilkörpers gegen den Ausleger, während eine mit der Batteriefußoberseite korrespondierende Fläche den Batteriefuß horizontal fixiert. Auch hier erfordert die Montage Übung und Geschick.
Die DE 101 54 389 A1 zeigt eine Halteeinrichtung mit einer Halteklammer, die eine am Batteriefuß ausgebildete Klemmleiste umgreift und die im Anlieferungszustand mittels einer Feststellschraube mit einem Scharnier vorverschraubt ist. Das Scharnier ist seinerseits an dem Batterieträger vormontiert. Die Halteklammer lässt sich dadurch in eine Montageposition aufschwenken, in der das Einsetzen der Batterie in den Batterieträger kollisionsfrei in einer gradlinigen Bewegung möglich ist. Anschließend kann die Halteklammer mit einem Handgriff in die Halteposition zurück geklappt oder geschwenkt und die Feststellschraube fest angezogen werden. Diese Haltevorrichtung erfordert dabei jedoch, insbesondere wenn das Verschwenken der Halteklammer mit demselben anschließend zum Festziehen der Feststellschraube verwendeten Schraubwerkzeug in einem einzigen Arbeits- bzw. Aufsetzgang erfolgen soll, einen von der Batteriehöhe und deren Einbaulage abhängigen, erheblichen sektorförmigen Verschwenkraum für das Werkzeug.

Aus der Deutschen Patentschrift DE 197 38 024 B4 ist eine Vorrichtung zum Befestigen einer Batterie an einem Fahrzeug bekannt, die einen flachen Batterieträger mit einer Aufstandsfläche für die Batterie, eine mit dem batterieträger verbundene Klemmleiste, die eine Rippe an einer der Batteriestirnseiten übergreift und eine separate, lose und mit dem Batterieträger verbindbare Halteklammer aufweist. Die Halteklammer übergreift eine an der anderen Stirnseite der Batterie ausgebildete Rippe. Zur Anpassung der Halteklammerposition an Batterien verschiedener Länge sind im Batterieträger unterhalb der Aufstandsfläche in unterschiedlichen Abständen zu der ersten Klemmleiste mehrere Taschen mit Rampen vorgesehen. Die Rampen kooperieren mit ihren schrägen Seitenwänden mit Gegenschrägen der Halteklammer. Die Halteklammer wird dabei unmittelbar an der Rippe angesetzt, die an der anderen Stirnseite der Batterie ausgebildet ist, und mittels einer Feststellschraube mit dem Batterieträger verschraubt. Dabei üben die korrespondierenden schiefen Ebenen eine Anpresskraft in Richtung auf die Klemmleiste aus. Hierzu muss aber lateral zu der Batterie bzw. dem Batterieträger ein ausreichender Handhabungs- bzw. Werkzeugspielraum vorgesehen werden, damit die Halteklammer zunächst in die Halteposition horizontal verschoben werden kann.

Bei modernen Fahrzeugen ist der im Motorraum vorhandene Bauraum für die Anordnung von Fahrzeugbauteilen zunehmend durch Designvorgaben - beispielsweise durch die Lage und den Anstellwinkel der Windschutzscheibe - und durch die zunehmende Anzahl und Größe elektrischer und elektronischer Komponenten limitiert. Deshalb hat die optimale Ausnutzung des Bauraums mit höchster Packungsdichte - bei gleichzeitiger einfacher und guter Erreichbarkeit insbesondere der wartungs- und verschleißbehafteten Komponenten - immer stärkere Bedeutung.

Vor diesem Hintergrund liegt der Erfindung die Aufgabe zugrunde, eine vormontierte Halteeinrichtung für eine Fahrzeugbatterie anzugeben, die zur einfachen und komfortablen Montage bzw. Demontage der Batterie nur einen äußerst geringen zusätzlichen Freiraum benötigt.

Diese Aufgabe wird erfindungsgemäß durch eine Halteeinrichtung mit den Merkmalen des Patentanspruchs 1 gelöst.

Ein wesentlicher Aspekt der Erfindung besteht in der Vorverbindung der Halteklammer mit dem Batterieträger in der Montageposition mittels der Führungseinrichtung, die eine bewegungsraumoptimierte und vorbestimmte Bewegung der Halteklammer sicherstellt. Ein sich daraus ergebender Vorteil ist die so realisierbare Platzersparnis (insbesondere in lateraler Dimension) aufgrund der schrägen Zustellbewegung der Halteklammer von der Montageposition in die Halteposition und der damit möglichen, sowohl aus einer Horizontal- als auch einer Vertikalkomponente bestehenden Werkzeugbewegung. Ein weiterer Vorteil besteht darin, dass die insoweit geführte Montage- bzw. Demontagebewegung der Halteklammer auch von ungeübtem Personal oder von Laien leicht und ohne die Gefahr von Beschädigungen ausgeführt werden kann. Die Halteklammer kann durch die Führungseinrichtung besonders Platz sparend nahe dem Batterieträger gehalten werden. Bei fahrzeugüblichen Batterien ergibt sich ein äußerst geringer lateraler Platzbedarf in der Größenordnung von nur ca. 12 Millimetern. Zudem sind zur endgültigen Positionierung der Batterie - im Gegensatz zu dem aus der DE 197 38 024 B4 bekannten Prinzip, die Halteklammer an eine Batteriestirnseite heran zu schieben - keine zusätzlichen konstruktiven Gestaltungsmaßnahmen erforderlich. In vorteilhafter Weise ermöglicht nämlich die Führungseinrichtung eine ausreichende Definition und auch kraftübertragende Bewegung der Halteklammer. Auch eine auf dem Batterieträger zunächst nur vorpositionierte Batterie wird durch eine von der Halteklammer bewirkte Zustellbewegung in die für die Halteposition korrekte Position verschoben. In der Halteposition ist die Halteklammer beispielsweise über eine Schraubverbindung fest mit dem Batterieträger verbunden.

Um die Halteklammer mit besonders einfachen Mitteln an dem Batterieträger vorzumontieren, ist die Halteklammer über mindestens ein Rastelement mit der Führungseinrichtung verbunden. Bevorzugt kann das Rastelement bzw. können die Rastelemente jeweils in einer sich in Führungsrichtung erstreckenden Öffnung der Führungseinrichtung geführt sein. Dabei können diese Öffnungen bevorzugt als Schlitze in der Führungseinrichtung, z.B. in der Rampe, ausgestaltet sein.

Vorteilhafte Weiterbildungen und Ausgestaltungen der Erfindung ergeben sich aus den Unteransprüchen und dem figürlich dargestellten Ausführungsbeispiel.

Nach einer besonders bevorzugten Ausgestaltung der Erfindung ist die Führungseinrichtung eine von der Aufstandsfläche abgehende, seitlich außerhalb der Aufstandsfläche sich erstreckende schräge Rampe. Je nach Steilheit der Rampe kann damit mit konstruktiv einfachen Mitteln eine besonders signifikante Einsparung lateralen Bauraum- bzw. Werkzeugzugangsraumbedarfs erreicht werden. Die schräge Rampe kann vorteilhafter Weise integral an dem bevorzugt als Kunststoffspritzgussteil ausgebildeten Batterieträger angeformt sein. Bei einem metallischen Batterieträger kann die Rampe bevorzugt in einem einzigen Tiefziehvorgang mit ausgebildet sein.

Um der erfindungsgemäßen Halteeinrichtung eine bei geringem Materialbedarf hohe Robustheit zu verleihen, ist nach einer bevorzugten Weiterbildung der Erfindung die Führungseinrichtung durch Versteifungsrippen versteift. Diese können bevorzugt unmittelbar parallel in der Nähe der Öffnungen bzw. Schlitze angeordnet sein und parallel zu diesen verlaufen.

Nach einer weiteren vorteilhaften Weiterbildung der Erfindung ist vorgesehen, dass die Halteklammer in der Montageposition durch mindestens ein mit der Führungseinrichtung kooperierendes Rastelement gehalten ist. Vorteilhafterweise kann die Halteklammer am Batterieträger damit schon beim Zuliefern in der Montageposition vorfixiert sein. Diese Vorpositionierung an der Führungseinrichtung kann beispielsweise von einer dreieckförmigen Aufdickung am oberen, in der Montageposition von der Halteklammer eingenommenen Bereich der Führungseinrichtung bewirkt sein, die mit einer korrespondierenden Rasteinrichtung an der Halteklammer kooperiert. Diese Rasteinrichtung kann von einem negativen Formabdruck gebildet sein und in der verrasteten Position die Aufdickung aufnehmen.

Besonders bevorzugt kann das halteklammerseitige Rastelement an einer Federzunge ausgebildet sein, die sich von der Aufstandsfläche weg erstreckt. Zum Lösen der Vorpositionierung kann dann einfach die Lasche entgegen ihrer Federkraft ausgelenkt werden, so dass die Rastelemente außer Eingriff gelangen und die Halteklammer entlang der Führungseinrichtung in die Halteposition gleiten kann.

Ein Ausführungsbeispiel der Erfindung wird nachfolgend anhand einer Zeichnung näher erläutert; es zeigen:
- Figur 1: einen Batterieträger einer erfindungsgemäßen Halteeinrichtung,
- Figur 2: eine Halteklammer,
- Figur 3: die in den Batterieträger nach Figur 1 eingesetzte Halteklammer nach Figur 2,
- Figur 4: die Ansicht "A" aus Figur 3 im Detail,
- Figur 5: die Halteklammer in dem Batterieträger in einer Halteposition (ohne Batterie) und
- Figur 6: einen Querschnitt durch die Halteeinrichtung entlang der Linie VI-VI in Figur 5.

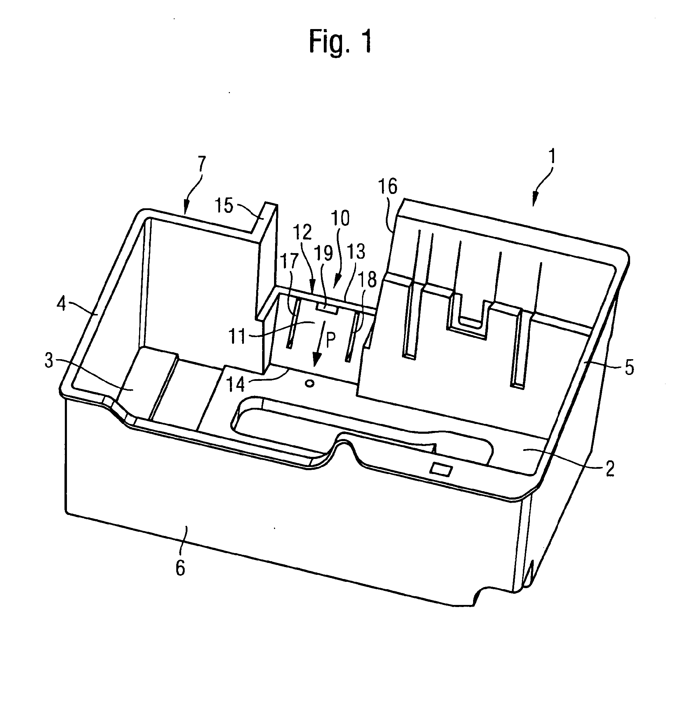

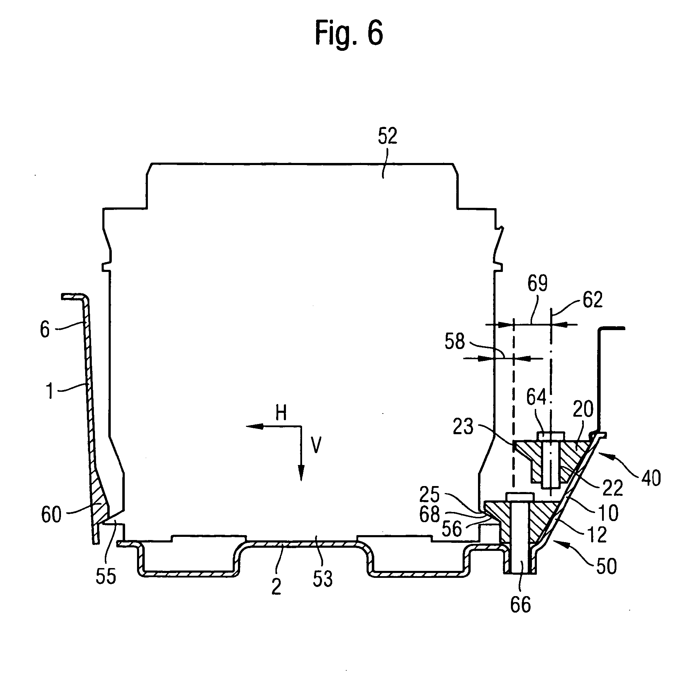

Figur 1 zeigt zum besseren Verständnis und zur klareren Darstellung separiert einen Batterieträger 1 zur Aufnahme einer (hier nicht gezeigten) Fahrzeugbatterie. Der Batterieträger umfasst im Wesentlichen eine Trägerplatte 2 mit einer Aufstandsfläche 3, die von Schmalseitenwänden 4, 5 und Längsseitenwänden 6, 7 umgeben ist. Die Seitenwände sind für die Funktion der Halteeinrichtung nicht unbedingt erforderlich; sie dienen im Wesentlichen dem zusätzlichen Schutz und gegebenenfalls der Wärmeisolation der Fahrzeugbatterie. Diese ruht ist mit ihrem Batterieboden oder Füßen im eingesetzten Zustand (vergleiche Figur 6) zumindest teilweise auf der Aufstandsfläche 3.

An den Batterieträger 1, der beispielhaft als Kunststoffspritzgussteil ausgeführt ist, grundsätzlich aber auch aus anderem Material, z.B. Metall, hergestellt sein kann, ist eine Führungseinrichtung 10 integral angeformt. Die Führungseinrichtung 10 umfasst eine Schräge 11, die wie eine Rampe 12 von einem weiter außen liegenden lateral über die Seitenwand 7 hinaus stehenden Rampenbeginn 13 in Richtung des Pfeils P winklig zur Aufstandsfläche 3 verläuft und am Rampenende 14 in die Aufstandsfläche einmündet. Die Anordnung der Führungseinrichtung zwischen rechtwinklig abknickenden Querwänden 15, 16 ist vorteilhaft, weil sie der Führungseinrichtung 10 eine erhöhte Stabilität verleiht. In der Führungsrichtung (Rampe 12) verlaufen in Richtung des Pfeils P als Schlitze ausgebildete Öffnungen 17, 18. Am Rampenbeginn ist eine Verdickung vorgesehen, die in nachfolgend noch erläuterter Weise als Rastnase 19 dient.

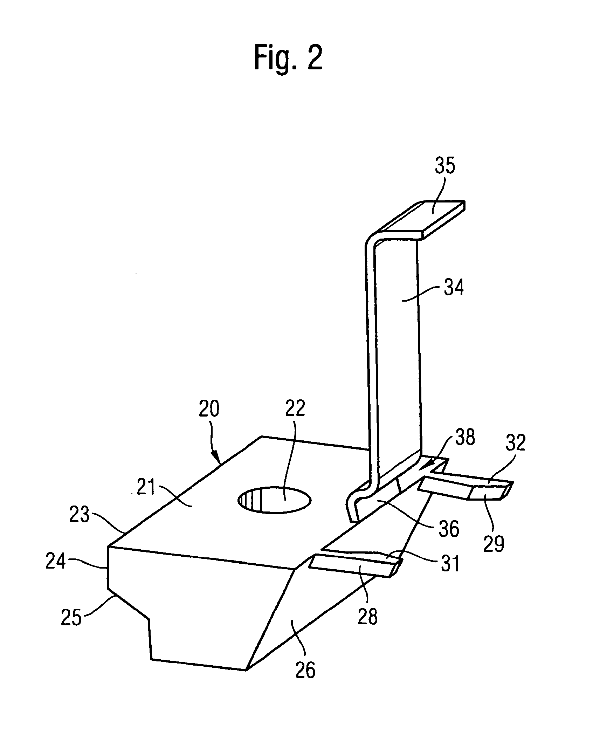

Figur 2 zeigt in isolierter Darstellung eine Halteklammer 20, die wie nachfolgend noch näher erläutert mit dem Batterieträger 1 eine vormontierte Baugruppe bildet. Die Halteklammer hat eine Deckfläche 21 und ist von einer zentralen, vertikalen Durchgangsbohrung 22 für eine nicht dargestellte Befestigungsschraube durchzogen. An ihrem vorderen Rand 23 weist die Halteklammer einen Vorsprung 24 auf, der als Klemmleiste 25 zum Fixieren einer entsprechend ausgebildeten geometrischen Klemmrippe einer Kraftfahrzeugbatterie (vgl. Figur 6) ausgebildet ist. Von der Rückseite 26 der Halteklammer 20 aus erstrecken sich zwei Stege 28, 29. Diese weisen an ihrem freien Endbereich jeweils ein Rastelement 31, 32 in Form von beiderseitigen leichten Verdickungen an den Seitenflächen der Stege 28, 29 auf. Die Stege sind in ihrer Breite auf die Schlitzbreite der Öffnungen 17, 18 abgestimmt, wobei die Verdickungen in ihrer Dicke geringfügig breiter bemessen sind als die Öffnungsweite der Schlitze bzw. Öffnungen 17, 18. Zur Montage der Halteklammer 20 weiten die Rastelemente 31, 32 die Öffnungen geringfügig auf, durchdringen diese und sind anschließend aufgrund der elastischen Rückverformung der Öffnungen 17, 18 so fixiert, dass die Halteklammer zwar entlang der Rampe 12 (Figur 1) mit ihrer Rückseite 26 gleiten kann, aber ansonsten unverlierbar an dem Batterieträger 1 gehalten ist. Die Geometrie der Stege 28, 29 bzw. der Rastelemente 31, 32 ist dabei so bemessen, dass die Halteklammer nur mit geringem Spiel von weniger als einem Millimeter von der Führungseinrichtung 10 gehalten ist.

Senkrecht nach oben erstreckt sich von der Deckfläche 21 aus eine Federzunge 34 mit einem Handhabungsende 35. Im Bereich der Deckfläche 21 ist ein von einer Hintergreifung oder Rinne 36 gebildetes Rastelement 38 vorgesehen. Dieses ist in seiner Geometrie kooperierend und im Wesentlichen invers ausgebildet zu der dreiecksförmigen Rastnase 19 (Figur 1).

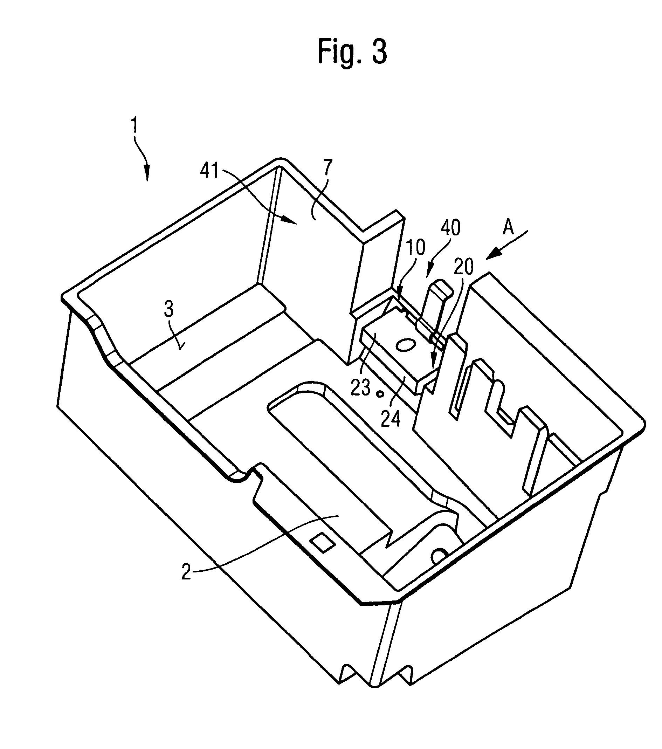

Figur 3 zeigt die erfindungsgemäße Halteeinrichtung mit dem Batterieträger 1 mit seiner Aufstandsfläche 3 und mit der Führungseinrichtung 10, in die die Halteklammer 20 eingesetzt ist. Die Halteklammer befindet sich in einer oberen, nachfolgend auch als Montageposition bezeichneten Position, in der insbesondere der Vorsprung 24 bzw. die Klemmleiste 25 der Halteklammer hinter die innenseitige Flucht 41 der Seitenwand 7 zurückgezogen ist. In dieser Position ist die Halteklammer dadurch vorfixiert, dass das Rastelement 38 das Rastelement 19 (vergleiche Figuren 1 und 2) verriegelnd aufnimmt. Damit ist für die anschließende Batteriemontage eine zuverlässige Vorfixierung der Halteklammer 20 in der Montageposition sichergestellt. Diese kann schon bei der Bereitstellung der Halteeinrichtung für den weiteren Montageprozess beispielsweise in der Fahrzeugproduktion bzw. schon bei der Zulieferung voreingestellt sein. Dadurch ist sichergestellt, dass sich keine halteeinrichtungsseitigen Hindernisse in dem im Wesentlichen vertikalen Einsetzweg der Batterie befinden.

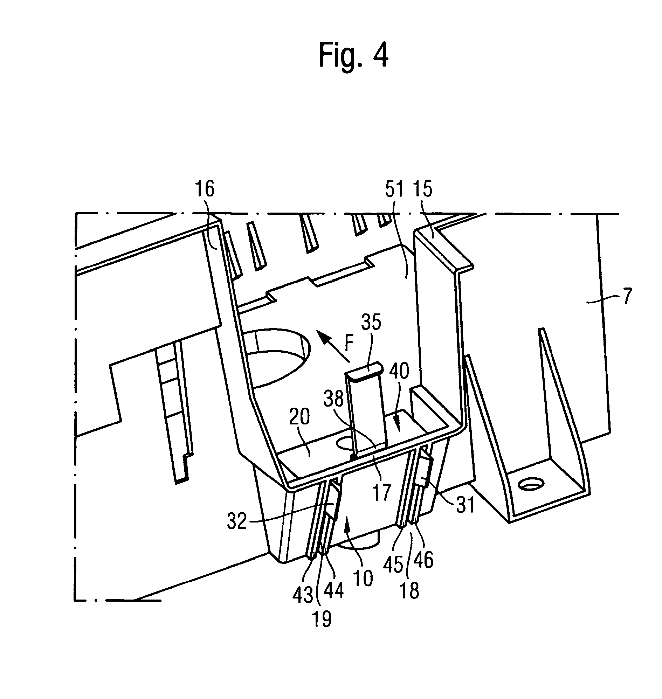

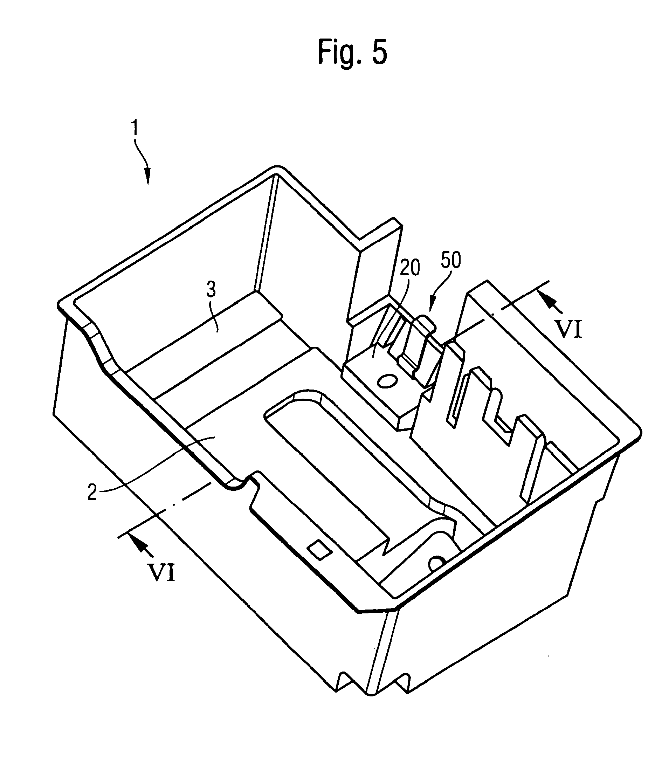

Zur weiteren Verdeutlichung zeigt Figur 4 eine Detailansicht in Richtung des Pfeils A aus Figur 3. Man erkennt ergänzend, dass die Führungseinrichtung parallel zu den Öffnungen 17, 18 verlaufende Versteifungsrippen 43, 44, 45, 46 aufweist, die die Steifigkeit der Führungseinrichtung noch weiter erhöhen. Um die Halteklammer 20 aus der in Figur 4 eingenommenen Montageposition 40 in eine Halteposition 50 (vergleiche Figur 5) zu überführen, wird das Handhabungsende 35 in Richtung des Pfeils F in den Innenraum 51 des Batterieträger ausgelenkt, wodurch die Rastelemente 19, 38 außer Eingriff kommen. Dadurch kann die Halteklammer 20 in Richtung des Pfeils P (Figur 1) nach unten gleiten, bis die Klemmleiste 25 auf einer entsprechenden Halterippe der (hier nicht dargestellten) Fahrzeugbatterie ruht.

Dieser Zustand ist in Figur 5 (wobei auch hier zu Verdeutlichungszwecken die Batterie nicht gezeigt ist) dargestellt. Man erkennt die geradlinig und schräg in Richtung auf die Trägerplatte 2 bzw. die Aufstandsfläche 3 des Batterieträgers 1 abgesenkte Halteklammer 20, die nun mit ihrer Klemmleiste 25 deutlich in den Innenraum 51 des Batterieträgers ragt und auf der nicht gezeigten Halterippe oder einem entsprechenden Fuß der Fahrzeugbatterie liegt.

Figur 6 zeigt einen Querschnitt entlang der Linie VI-VI in Figur 5, wobei die Halteklammer 20 in Abweichung von Figur 5 sowohl in der Montageposition 40 (Figur 3) als auch in der Halteposition 50 (Figur 5) gezeigt ist. In Figur 6 ist eine in die Halteeinrichtung eingesetzte Batterie 52 mit einem Batteriefuß 53 zu erkennen, der seitlich vorstehende Klemmleisten 55, 56 aufweist. Zwischen der Batterie 52 und dem Rand 23 der Halteklammer 20 besteht in der Montageposition 40 ein lateraler Abstand 58, der in üblichen Bauformen nur ca. 10 Millimeter beträgt. Damit ist die Batterie auch für Ungeübte in vertikaler Richtung V leicht soweit einsetzbar und absenkbar, dass sich der Batteriefuß 53 auf der Aufstandsfläche 3 des Batterieträgers 1 abstützt. Dabei kann die Batterie gegenüber der in Figur 6 gezeigten Endlage näher nach rechts zum Rand 23 hin verschoben sein und zwar so, dass ihre Klemmleiste 55 an einem Vorsprung 60 vorbei gleitet, der in der Seitenwand 6 fußnah ausgebildet ist.

Zur endgültigen Fixierung der Batterie 52 wird anschließend ein Montagewerkzeug - beispielsweise ein Schraubwerkzeug mit einer vertikalen Achse 62 - mit einer nur andeutungsweise dargestellten Schraube 64 aufgesetzt. Dabei durchdringt die Schraube die Bohrung 22 in der Halteklammer 20. Durch Kraftausübung in vertikaler Richtung V gleitet die Halteklammer 20 entlang der schiefen Ebene (Rampe) der Führungseinrichtung 10 bis in die in Figur 6 dargestellte Halteposition 50. In dieser Position ist die Schraube 64 mit einem korrespondierenden Gewinde 66 im Bodenbereich des Batterieträgers 1 in Eingriff und übt über die Klemmleiste 25 und eine korrespondierende Schräge 68 der Klemmleiste 56 sowohl eine Haltekraft in vertikaler Richtung V als auch eine Andruckkraft nach links in horizontaler Richtung H aus. Durch die Kraftkomponente in Richtung H wird die Batterie nötigenfalls geringfügig nach links verschoben, so dass die Klemmleiste 55 unter den Vorsprung 60 gelangt. Mit weiterem Festziehen der Schraube 64 ist die Batterie 52 damit zuverlässig und fest montiert, aber bei Bedarf auch leicht wieder demontierbar. Für die laterale Bewegung in Richtung H der Halteklammer 20 bzw. der Schraube 64 und damit des Montagewerkzeugs ist nur ein sehr geringer lateraler Raumbedarf 69 erforderlich. Dieser beträgt nur wenige Millimeter.

### Bezugszeichenliste

- 1: Batterieträger
- 2: Trägerplatte
- 3: Aufstandsfläche
- 4, 5: Schmalseitenwände
- 6, 7: Längsseitenwände

- 10: Führungseinrichtung
- 11: Schräge
- 12: Rampe
- 13: Rampenbeginn
- 14: Rampenende
- 15, 16: Querwände
- 17, 18: Öffnungen
- 19: Rastnase

- 20: Halteklammer
- 21: Deckfläche
- 22: Durchgangsbohrung
- 23: vorderer Rand
- 24: Vorsprung
- 25: Klemmleiste
- 26: Rückseite
- 28, 29: Stege

- 31, 32: Rastelemente
- 34: Federzunge
- 35: Handhabungsende
- 36: Rinne
- 38: Rastelement
- 40: Montageposition
- 41: Innenseitige Flucht
- 43, 44: Versteifungsrippen
- 45, 46: Versteigungsrippen

- 50: Halteposition
- 51: Innenraum
- 52: Batterie
- 53: Batteriefuß
- 55, 56: Klemmleisten
- 58: lateraler Abstand
- 60: Vorsprung
- 62: vertikale Achse
- 64: Schraube
- 66: Gewinde
- 68: Schräge
- 69: lateraler Raumbedarf

- A: Pfeil
- F: Pfeil
- P: Pfeil

- H: horizontale Richtung
- V: vertikale Richtung

## Patentansprüche

1. Halteeinrichtung für eine Fahrzeugbatterie (52)
mit einem Batterieträger (2) mit einer Aufstandsfläche (3) für den Batteriefuß (53),
mit einer Halteklammer (20) und
mit einer Führungseinrichtung (10), die eine relativ zu dem Batterieträger (2) und schräg zur Aufstandsfläche (3) hin verlaufende Bewegung der Halteklammer (20) in eine Halteposition (50) bewirkt, in der die Halteklammer (20) eine Haltekraft auf die Batterie (52) bewirkt,
**gekennzeichnet dadurch, dass**
die Halteklammer (20) über mindestens ein Rastelement (31, 32) mit der Führungseinrichtung (10) verbunden ist, so dass die Führungseinrichtung (10) die Halteklammer (20) aus einer definierten, das Aufsetzen der Batterie (52) auf die Aufstandsfläche (3) ermöglichenden Montageposition (40) in die Halteposition (50) führt.

2. Halteeinrichtung nach Anspruch 1,
**dadurch gekennzeichnet, dass**
die Führungseinrichtung (10) eine von der Aufstandsfläche (3) abgehende, seitlich außerhalb der Aufstandsfläche sich erstreckende schräge Rampe (12) ist.

3. Halteeinrichtung nach Anspruch 1 oder 2,
**dadurch gekennzeichnet, dass**
das Rastelement (31) oder die Rastelemente (31, 32) jeweils in einer sich in Führungsrichtung (P) erstreckenden Öffnung (17, 18) der Führungseinrichtung (10) geführt sind.

4. Halteeinrichtung nach Anspruch 1, 2 oder 3,
**dadurch gekennzeichnet, dass**
die Führungseinrichtung (10) durch Versteifungsrippen (43 bis 46) versteift ist.

5. Halteeinrichtung nach mindestens einem der vorangehenden Ansprüche,
**dadurch gekennzeichnet, dass**
die Halteklammer (20) in der Montageposition (40) durch mindestens ein mit der Führungseinrichtung (10) kooperierendes Rastelement (38) gehalten ist.

6. Halteeinrichtung nach Anspruch 5,
**dadurch gekennzeichnet, dass**
das halteklammerseitige Rastelement (38) an einer Federzunge (34) ausgebildet ist, die sich von der Aufstellfläche (3) weg erstreckt.

## Claims

1. A holding device for a vehicle battery (52), comprising a battery support (2) with a contact surface (3) for the foot (53) of the battery, a retaining clip (20) and a guide device (10) which causes a movement of the retaining clip (20) to a holding position (50) which extends relative to the battery support (2) and inclined in relation to the contact surface (3), in which holding position the retaining clip (20) exerts a holding force on the battery (52), **characterized in that** the retaining clip (20) is connected via at least one latching element (31, 32) with the guide device (10), so that the guide device (10) guides the retaining clip (20) from a defined mounting position (40) which enables the placement of the battery (52) on the contact surface (3) to the holding position (50).

2. A holding device according to claim 1, **characterized in that** the guide device (10) is a ramp (12) which originates from the contact surface (3) and extends laterally outside of the contact surface.

3. A holding device according to claim 1 or 2, **characterized in that** the latching element (31) or the latching elements (31, 32) are each guided in an opening (17, 18) of the guide device (10) which extends in the direction of guidance (P).

4. A holding device according to claim 1, 2 or 3, **characterized in that** the guide device (10) is stiffened by stiffening ribs (43 to 46).

5. A holding device according to at least one of the preceding claims, **characterized in that** the retaining clip (20) is held in the mounting position (40) by at least one latching element (38) cooperating with the guide device (10).

6. A holding device according to claim 5, **characterized in that** the latching element (38) on the side of the retaining clip is arranged on a spring tongue (34) which extends away from the contact surface (3).

## Revendications

1. Dispositif de maintien pour une batterie de véhicule (52)
avec un support de batterie (2) possédant une surface d'appui (3) pour le pied de la batterie (53),
avec une pince de maintien (20) et
avec un dispositif de guidage (10) qui réalise un mouvement de la pince de maintien (20) par rapport au support de batterie (2) et en oblique vers la surface d'appui (3) dans une position de maintien (50) dans laquelle la pince de maintien (20) exerce une force de maintien sur la batterie (52),
**caractérisé en ce que** la pince de maintien (20) est reliée par au moins un élément d'emboîtement (31, 32) au dispositif de guidage (10), de telle manière que le dispositif de guidage (10) guide la pince de maintien (20) d'une position de montage (40) permettant la dépose de la batterie (52) sur la surface de pose (3) à la position de maintien (50).

2. Dispositif de maintien selon la revendication 1, **caractérisé en ce que** le dispositif de guidage (10) est une rampe oblique (12) partant de la surface d'appui (3) et s'étendant sur le côté à l'extérieur de la surface d'appui.

3. Dispositif de maintien selon la revendication 1 ou 2, **caractérisé en ce que** l'élément d'emboîtement (31) ou les éléments d'emboîtement (31, 32) sont guidés chacun dans une ouverture (17, 18) du dispositif de guidage (10) qui s'étend dans le sens du guidage (P).

4. Dispositif de maintien selon la revendication 1, 2 ou 3, **caractérisé en ce que** le dispositif de guidage (10) est raidi par des nervures raidisseuses (43 à 46).

5. Dispositif de maintien selon l'une au moins des revendications précédentes, **caractérisé en ce que** la pince de maintien (20) est retenue dans la position de montage (40) par au moins un élément d'emboîtement (38) coopérant avec le dispositif de guidage (10).

6. Dispositif de maintien selon la revendication 5, **caractérisé en ce que** l'élément d'emboîtement (38) du côté de la pince est formé d'une languette à ressort (34) qui s'écarte de la surface de pose (3).
